# EUROPEAN PATENT APPLICATION

(11) **EP 4 535 601 A1**
(43) Date of publication of application: **09.04.2025**
(21) Application number: 23814682.3
(22) Date of filing: 06.03.2023
(51) Int. Cl.: H02J 7/00, H01M 10/44, B60L 58/12

(54) **BATTERY CIRCUIT AND VEHICLE**

(30) Priority: 31.05.2022 CN 202210614126
(71) Applicant: BYD Company Limited, Shenzhen, Guangdong 518118 (CN)
(72) Inventor: XIONG, Shi, Shenzhen, Guangdong 518118 (CN); FENG, Tianyu, Shenzhen, Guangdong 518118 (CN); DENG, Linwang, Shenzhen, Guangdong 518118 (CN)
(74) Representative: Hamer, Christopher K.
(86) International application number: PCT/CN2023/079717
(87) International publication number: WO 2023/231483

(57) **Abstract**

A battery circuit (100). A positive electrode of a first battery pack (102) is connected to a power supply end (101), and a negative electrode of the first battery pack (102) is connected to a positive electrode of a second battery pack (103); a negative electrode of the second battery pack (103) is connected to a grounding end (107); a first end of a first switch (105) is connected to the power supply end (101), a second end of the first switch (105) is connected to a first end of a second switch (106), and a control end of the first switch (105) is connected to a first output end of a control unit (108); a second end of the second switch (106) is connected to the grounding end (107), and a control end of the second switch (106) is connected to a second output end of the control unit (108); a voltage transformation unit (104) is connected between the negative electrode of the first battery pack (102) and the second end of the first switch (105); and the control unit (108) is used for controlling the closing or opening of the first switch (105) and the second switch (106) according to at least one state-of-charge value of the first battery pack (102) and the second battery pack (103). Further provided is a vehicle.

## Description

The present disclosure claims priority to Chinese Patent Application No. 202210614126.2, filed on May 31, 2022 and entitled "BATTERY CIRCUIT AND VEHICLE". The entire content of the above-referenced application is incorporated herein by reference.

### FIELD

The present disclosure relates to the technical field of vehicles, and more specifically, to a battery circuit and a vehicle.

### BACKGROUND

In the related art, a dual battery pack composed of a power-type battery pack and an energy-type battery pack is provided.

A state of charge (SOC) value is an important parameter of the energy-type battery pack and the power-type battery pack. How to control the dual battery pack composed of the power-type battery pack and the energy-type battery pack according to the SOC value of the energy-type battery pack or the SOC value of the power-type battery pack becomes a technical problem urgently to be resolved.

### SUMMARY

The present disclosure is intended to provide a new technical solution for a battery circuit.

According to a first aspect of the present disclosure, a battery circuit is provided, which includes a power supply terminal, a first battery pack, a second battery pack of a different type from the first battery pack, a voltage transformation unit, a first switch, a second switch, a grounding terminal, and a control unit.

A positive electrode of the first battery pack is connected with the power supply terminal. A negative electrode of the first battery pack is connected with a positive electrode of the second battery pack.

A negative electrode of the second battery pack is connected with the grounding terminal.

A first terminal of the first switch is connected with the power supply terminal. A second terminal of the first switch is connected with a first terminal of the second switch. A control terminal of the first switch is connected with a first output terminal of the control unit.

A second terminal of the second switch is connected with the grounding terminal. A control terminal of the second switch is connected with a second output terminal of the control unit.

A voltage transformation unit is connected between the negative electrode of the first battery pack and the second terminal of the first switch.

The control unit is configured to control the first switch and the second switch to be closed or opened according to at least one of a state of charge (SOC) value of the first battery pack and an SOC value of the second battery pack.

According to an embodiment of the present disclosure, the control unit is configured to:
control the first switch and the second switch to be closed or opened according to a first preset control rule when an SOC value of a power-type battery pack is less than a first preset threshold, so that the SOC value of the power-type battery pack is greater than or equal to the first preset threshold;
control the first switch and the second switch to be closed or opened according to a second preset control rule when the SOC value of the power-type battery pack is greater than or equal to the first preset threshold and less than or equal to a second preset threshold, so that a charging current or a discharging current of the power-type battery pack is 0; and
control the first switch and the second switch to be opened when the SOC value of the power-type battery pack is greater than the second preset threshold or an SOC value of an energy-type battery pack is less than a target value, to connect the first battery pack and the second battery pack in series for charging.

According to an embodiment of the present disclosure, a deviation between a rated voltage of the first battery pack and a rated voltage of the second battery pack is less than a first preset range; and/or
a deviation between a ratio of a capacity of the first battery pack to a capacity of the second battery pack and a ratio of a maximum discharge rate of the second battery pack to a maximum discharge rate of the first battery pack is less than a second preset range.

According to an embodiment of the present disclosure, the rated voltage of the first battery pack is the same as the rated voltage of the second battery pack; and/or
the ratio of the capacity of the first battery pack to the capacity of the second battery pack is the same as the ratio of the maximum discharge rate of the second battery pack to the maximum discharge rate of the first battery pack.

According to an embodiment of the present disclosure, the first battery pack is a power-type battery pack; and the second battery pack is an energy-type battery pack; or
the first battery pack is an energy-type battery pack; and the second battery pack is a power-type battery pack.

According to an embodiment of the present disclosure, the control unit includes a control subunit, a pulse-width modulation (PWM) signal generation subunit, and an inverter.

A first output terminal of the control subunit is connected with an input terminal of the PWM signal generation subunit.

A first output terminal of the PWM signal generation subunit is connected with the control terminal of the first switch. A second output terminal of the PWM signal generation subunit is connected with an input terminal of the inverter.

An output terminal of the inverter is connected with the control terminal of the second switch.

According to an embodiment of the present disclosure, the first battery pack is a power-type battery pack, and the second battery pack is an energy-type battery pack. The battery circuit further includes a filtering unit.

A first terminal of the filtering unit is connected with the positive electrode of the first battery pack. A second terminal of the filtering unit is connected with the power supply terminal. A third terminal of the filtering unit is connected with the negative electrode of the first battery pack.

According to an embodiment of the present disclosure, the filtering unit includes a first inductor and a first capacitor.

A first terminal of the first inductor is connected with the positive electrode of the first battery pack. A second terminal of the first inductor is connected with the power supply terminal.

A first terminal of the first capacitor is connected with the first terminal of the first inductor. A second terminal of the first capacitor is connected with the negative electrode of the first battery pack.

According to an embodiment of the present disclosure, the battery circuit further includes a first freewheeling unit and a second freewheeling unit.

An input terminal of the first freewheeling unit is connected with the second terminal of the first switch. An output terminal of the first freewheeling unit is connected with the first terminal of the first switch.

An input terminal of the second freewheeling unit is connected with the second terminal of the second switch. An output terminal of the second freewheeling unit is connected with the first terminal of the second switch.

According to an embodiment of the present disclosure, the first freewheeling unit is a first diode, and the second freewheeling unit is a second diode.

An anode of the first diode is connected with the second terminal of the first switch. A cathode of the first diode is connected with the first terminal of the first switch.

An anode of the second diode is connected with the second terminal of the second switch. A cathode of the second diode is connected with the first terminal of the second switch.

According to an embodiment of the present disclosure, the battery circuit further includes a voltage stabilization unit.

The voltage stabilization unit is connected between the power supply terminal and the grounding terminal.

According to an embodiment of the present disclosure, the voltage stabilization unit is a second capacitor.

According to an embodiment of the present disclosure, the voltage transformation unit is a second inductor.

According to a second aspect of the present disclosure, a vehicle is provided. The vehicle includes the battery circuit in any implementation of the foregoing first aspect.

According to the battery circuit in an embodiment of the present disclosure, a dual battery pack composed of the first battery pack and the second battery pack may be controlled according to at least one of the SOC value of the first battery pack and the SOC value of the second battery pack.

Other features and advantages of the present disclosure will become clear from the following detailed description of exemplary embodiments of the present disclosure provided with reference to drawings.

### BRIEF DESCRIPTION OF THE DRAWINGS

Drawings that are incorporated into and constitute a part of the specification illustrate embodiments of the present disclosure, and are used to explain the principle of the present disclosure together with the description thereof.
FIG. 1 is a schematic structural diagram I of a battery circuit according to an embodiment of the present disclosure;
FIG. 2 is a schematic structural diagram of a control unit according to an embodiment of the present disclosure;
FIG. 3 is a schematic structural diagram II of the battery circuit according to an embodiment of the present disclosure; and
FIG. 4 is a schematic structural diagram III of the battery circuit according to an embodiment of the present disclosure.

In the drawings:
100-Battery circuit; 101-Power supply terminal; 102-First battery pack; 103-Second battery pack;
104-Voltage transformation unit; 1041-Second inductor; 105-First switch; 106-Second switch;
107-Grounding terminal; 108-Control unit; 1081-Control subunit;
1082-Pulse-width modulation (PWM) signal generation subunit; 1083-Inverter; 1084-Switch opening signal generation subunit; 109-Filtering unit;
1091-First inductor; 1092-First capacitor; 110-First freewheeling unit;
1101-First diode; 111-Second freewheeling unit; 1111-Second diode;
112-Voltage stabilization unit; 1121-Second capacitor.

### DETAILED DESCRIPTION

Various exemplary embodiments of the present disclosure are described in detail with reference to drawings. It should be noted that, unless otherwise specified, relative arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and the application or use thereof.

Technologies, methods, and devices known to a person of ordinary skill in the related art may not be discussed in detail, but where appropriate, the techniques, the methods, and the devices should be considered as a part of the specification.

In examples shown and discussed herein, any specific value should be construed as merely exemplary and not as a limitation. Therefore, other examples of the exemplary embodiments may have different values.

It should be noted that, similar reference numerals and letters represent similar items in the following drawings. Therefore, once an item is defined in a drawing, the item does not need to be further discussed in subsequent drawings.

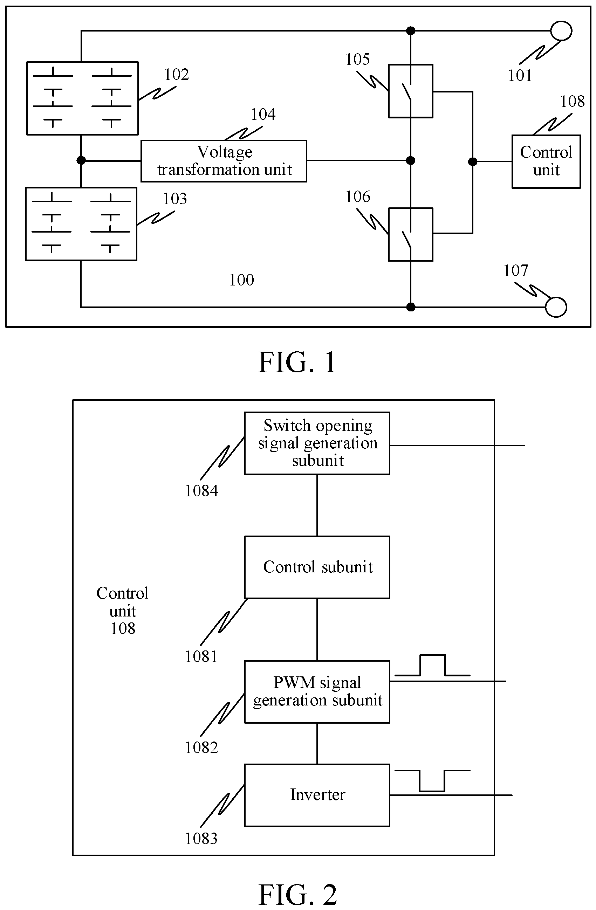

An embodiment of the present disclosure provides a battery circuit 100. As shown in FIG. 1, the battery circuit 100 includes a power supply terminal 101, a first battery pack 102, a second battery pack 103 of a different type from the first battery pack 102, a voltage transformation unit 104, a first switch 105, a second switch 106, a grounding terminal 107, and a control unit 108.

A positive electrode of the first battery pack 102 is connected with the power supply terminal 101. A negative electrode of the first battery pack 102 is connected with a positive electrode of the second battery pack 103.

A negative electrode of the second battery pack 103 is connected with the grounding terminal 107.

A first terminal of the first switch 105 is connected with the power supply terminal 101. A second terminal of the first switch 105 is connected with a first terminal of the second switch 106. A control terminal of the first switch 105 is connected with a first output terminal of the control unit 108.

A second terminal of the second switch 106 is connected with the grounding terminal 107. A control terminal of the second switch 106 is connected with a second output terminal of the control unit 108.

The voltage transformation unit 104 is connected between the negative electrode of the first battery pack 102 and the second terminal of the first switch 105.

The control unit 108 is configured to control the first switch 105 and the second switch 106 to be closed or opened according to at least one of a state of charge (SOC) value of the first battery pack 102 and an SOC value of the second battery pack 103.

In this embodiment of the present disclosure, the battery circuit is provided, which includes the power supply terminal, the first battery pack, the second battery pack of a different type from the first battery pack, the voltage transformation unit, the first switch, the second switch, the grounding terminal, and the control unit. The positive electrode of the first battery pack is connected with the power supply terminal. The negative electrode of the first battery pack is connected with the positive electrode of the second battery pack. The negative electrode of the second battery pack is connected with the grounding terminal. The first terminal of the first switch is connected with the power supply terminal. The second terminal of the first switch is connected with the first terminal of the second switch. The control terminal of the first switch is connected with the first output terminal of the control unit. The second terminal of the second switch is connected with the grounding terminal. The control terminal of the second switch is connected with the second output terminal of the control unit. The voltage transformation unit is connected between the negative electrode of the first battery pack and the second terminal of the first switch. The control unit is configured to control the first switch and the second switch to be closed or opened according to at least one of the SOC value of the first battery pack and the SOC value of the second battery pack. According to the battery circuit provided in this embodiment of the present disclosure, a dual battery pack composed of the first battery pack and the second battery pack may be controlled according to at least one of the SOC value of the first battery pack and the SOC value of the second battery pack.

In this embodiment of the present disclosure, when the battery circuit 100 is in a discharging state, the power supply terminal 101 in the battery circuit 100 is configured to connect to a power input terminal of a load, and the grounding terminal 107 in the battery circuit 100 is configured to connect to a grounding terminal of the load. Exemplarily, the load may be a motor of an electric vehicle or a hybrid vehicle.

Alternatively, when the battery circuit 100 is in a charging state, the power supply terminal 101 in the battery circuit 100 is configured to connect to a power output terminal of a charging device, and the grounding terminal 107 in the battery circuit 100 is configured to connect to a grounding terminal of the charging device. Exemplarily, the charging device may be a charging pile or a braking system of an electric vehicle or a hybrid vehicle.

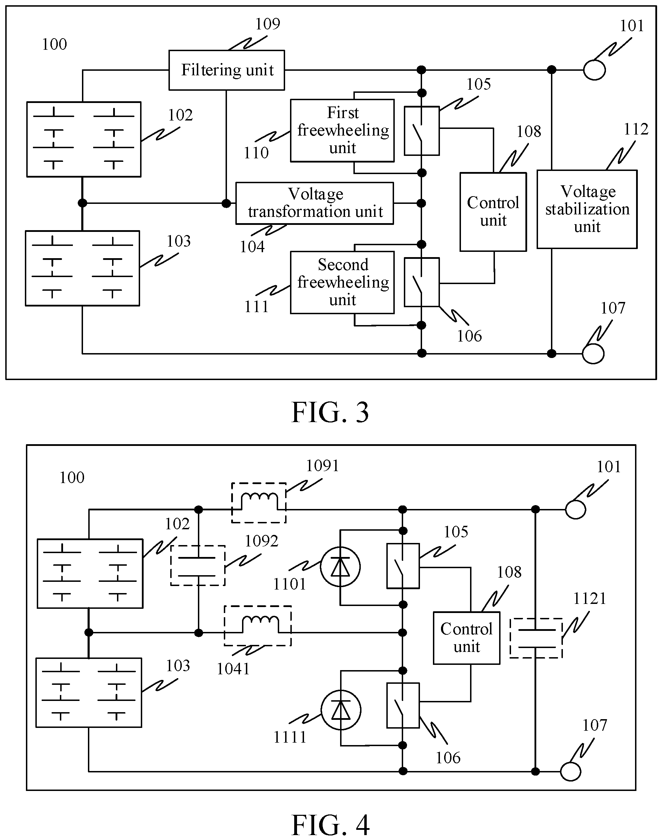

In an embodiment of the present disclosure, as shown in FIG. 4, the voltage transformation unit 104 may be a second inductor 1041. Certainly, the voltage transformation unit 104 may be implemented in another manner.

In an embodiment of the present disclosure, an inductance value of the second inductor 1041 may be set to a range of 2 µH to 1500 µH.

In this embodiment of the present disclosure, the voltage transformation unit 104 has a low cost and a simple structure when the voltage transformation unit 104 is the second inductor 1041.

In an embodiment of the present disclosure, the first switch 105 and the second switch 106 may be a switch IC, a metal oxide semiconductor field effect transistor (MOSFET), an insulated gate bipolar transistor (IGBT), a silicon carbide (SiC) switch, or the like.

It should be noted that, in this embodiment of the present disclosure, the first switch 105 and the second switch 106 are switches of a same type. To be specific, when the control terminals of the first switch and the second switch receive a high level, the first switch 105 and the second switch 106 are both closed or opened. When the control terminals of the first switch and the second switch receive a low level, the first switch 105 and the second switch 106 are both opened or closed.

In this embodiment of the present disclosure, the first battery pack 102 and the second battery pack 103 are of different types. Specifically, the first battery pack 102 is a power-type battery pack, and the second battery pack 103 is an energy-type battery pack. Alternatively, the first battery pack 102 is an energy-type battery pack, and the second battery pack 103 is a power-type battery pack.

In this embodiment of the present disclosure, the power-type battery pack is a battery pack with a high power density. Compared with the energy-type battery pack, the power-type battery pack can achieve high-power charging/discharging in a short time, but stores less energy. The power density is a maximum energy transfer power during charging or discharging of a battery with a unit weight or volume. In addition, in this embodiment of the present disclosure, a voltage value of the power-type battery pack may be set to a range of 100 V to 1000 V.

The energy-type battery pack is a battery pack with a high energy density. Compared with the power-type battery pack, the energy-type battery pack stores more energy, but has an insufficient charging/discharging capacity in a short time. The energy density is energy stored in a battery with a unit weight or volume. In addition, in this embodiment of the present disclosure, a voltage value of the energy-type battery pack may be set to a range of 100 V to 1000 V.

In this embodiment of the present disclosure, specific types of the first battery pack 102 and the second battery pack 103 are not limited, which can improve compatibility of the battery circuit 100 provided in the embodiments of the present disclosure.

In this embodiment of the present disclosure, the SOC value is used to represent a remaining capacity of the battery pack, which is numerically defined as a proportion of the remaining capacity to a capacity of the battery pack, and is usually expressed as a percentage. The SOC value is in a range of 0 to 1. When SOC is equal to 0, the battery pack is fully discharged. When SOC is equal to 1, the battery pack is fully charged.

In an embodiment of the present disclosure, the SOC value of the battery pack may be estimated according to parameters such as a voltage, a charging/discharging current, and an internal resistance of the battery pack. Certainly, the SOC value may be obtained in another manner. It should be noted that, a manner of obtaining the SOC value of the battery pack is not limited in this embodiment of the present disclosure.

In this embodiment of the present disclosure, that the control unit 108 is configured to control the first switch 105 and the second switch 106 to be closed or opened according to at least one of the SOC value of the first battery pack 102 and the SOC value of the second battery pack 103, may be specifically implemented in the following three manners.

First manner: When the SOC value of the power-type battery pack is less than a first preset threshold SOC_low, the first switch 105 and the second switch 106 are controlled to be closed or opened according to a first preset control rule, so that the SOC value of the power-type battery pack is greater than or equal to the first preset threshold SOC_low.

In this embodiment of the present disclosure, if the first battery pack 102 is a power-type battery pack and the second battery pack 103 is an energy-type battery pack, the first preset control rule is performing a first on/off operation, which includes controlling the first switch 105 to be opened and the second switch 106 to be closed within a first time period and controlling the first switch 105 to be closed and the second switch 106 to be opened within a second time period. The first on/off operation is repeated.

The second time period is a time period adjacent to the first time period and after the first time period. Durations corresponding to the first time period and the second time period may be set according to experience. The first preset threshold SOC_low is a minimum SOC value required for high-power discharging of the power-type battery pack.

In an embodiment of the present disclosure, the power-type battery pack has a large voltage drop during high-current discharging at a low temperature, SOC_lowc[30%, 50%] is set. In an example, SOC_low=50% is set.

When the SOC value of the power-type battery pack is less than the first preset threshold SOC_low, it indicates that the power-type battery pack cannot achieve high-power discharging. Therefore, during traction of the electric vehicle or the hybrid vehicle, the power-type battery pack cannot provide a peak discharging power required by the electric vehicle or the hybrid vehicle. Based on the above, the first switch 105 is controlled to be opened and the second switch 106 is controlled to be closed within the first time period. In this case, the second battery pack 103 charges the voltage transformation unit 104. The first switch 105 is controlled to be closed and the second switch 106 is controlled to be opened in the second time period. In this case, the voltage transformation unit 104 releases stored power to the first battery pack 102. In other words, the voltage transformation unit 104 implements a boosting function. The process is repeated, so that the second battery pack 103 can charge the first battery pack 102. Based on the above, the SOC value of the first battery pack 102 may be adjusted to be greater than the first preset threshold SOC_low. Further, the first battery pack 102 can achieve high-power discharging. Therefore, during braking of the electric vehicle or the hybrid vehicle, the first battery pack 102 can provide the peak discharging power required by the vehicle, to ensure normal traveling of the electric vehicle or the hybrid vehicle.

In an embodiment of the present disclosure, the SOC value of the first battery pack 102 may be further adjusted to be greater than the first preset threshold SOC_low and less than a third preset threshold SOC_mid. The third preset threshold SOC_mid is an allowable SOC value upper limit of the first battery pack 102 when the second battery pack 103 charges the first battery pack 102. In an example, SOC_mid=60% is set.

It should be noted that, if the first battery pack 102 is an energy-type battery pack and the second battery pack 103 is a power-type battery pack, the first preset control rule is performing a second on/off operation, which includes controlling the first switch 105 to be closed and the second switch 106 to be opened within the first time period and controlling first switch 105 to be opened and the second switch 106 to be closed within the second time period. The second on/off operation is repeated. In this way, the first battery pack 102 can charge the second battery pack 103. Based on the above, the SOC value of the second battery pack 103 may be adjusted to be greater than the first preset threshold SOC_low. Further, the second battery pack 103 can achieve high-power discharging. Therefore, during braking of the electric vehicle or the hybrid vehicle, the second battery pack 103 can provide the peak discharging power required by the vehicle, to ensure normal traveling of the electric vehicle or the hybrid vehicle.

Second manner: When the SOC value of the power-type battery pack is greater than or equal to the first preset threshold SOC_low and less than or equal to a second preset threshold SOC_high, the first switch 105 and the second switch 106 are controlled to be closed or opened according to a second preset control rule, so that a charging current or a discharging current of the power-type battery pack is 0.

In an embodiment of the present disclosure, since the charging current of the power-type battery pack is limited when the SOC value thereof is greater than 80%, SOC_highe[60%, 80%] is set. In an example, SOC_high=70% is set.

When the SOC value of the power-type battery pack is greater than or equal to the first preset threshold SOC_low and less than or equal to the second preset threshold SOC_high, it indicates that the power-type battery pack can provide the peak discharging power required by the electric vehicle or the hybrid vehicle during traction of the electric vehicle or the hybrid vehicle, and the power-type battery pack can absorb a peak charging power during the braking of the electric vehicle or the hybrid vehicle. In this case, the first switch 105 and the second switch 106 are controlled to be closed or opened, so that the charging current or the discharging current of the power-type battery pack is 0. The power-type battery pack may be controlled to remain the state.

In this embodiment of the present disclosure, if the first battery pack 102 is a power-type battery pack and the second battery pack 103 is an energy-type battery pack, the second preset control rule may be performing a second on/off operation when the battery circuit 100 is in the charging state. The second on/off operation includes controlling the first switch 105 to be closed and the second switch 106 to be opened within a third time period and controlling the first switch 105 to be opened and the second switch 106 to be closed within a fourth time period. The step is repeated.

In this embodiment of the present disclosure, the fourth time period is a time period adjacent to the third time period and after the third time period. Durations corresponding to the third time period and the fourth time period may be set according to experience.

In this embodiment of the present disclosure, when the battery circuit 100 is in the charging state, the first switch 105 is controlled to be closed and the second switch 106 is controlled to be opened within the third time period, so that the charging device charges only the voltage transformation unit 104. The first switch 105 is controlled to be opened and the second switch 106 is controlled to be closed within the fourth time period. In this case, the voltage transformation unit 104 releases the stored power to the second battery pack 103. The process may be repeated to achieve a charging current of 0 for the first battery pack 102.

In this embodiment of the present disclosure, if the first battery pack 102 is a power-type battery pack and the second battery pack 103 is an energy-type battery pack, the second preset control rule may alternatively be performing a third on/off operation when the battery circuit 100 is in the discharging state. The third on/off operation includes controlling the first switch 105 to be opened and the second switch 106 to be closed within a fifth time period and controlling the first switch 105 to be closed and the second switch 106 to be opened within a sixth time period. The step is repeated.

In this embodiment of the present disclosure, the sixth time period is a time period adjacent to the fifth time period and after the fifth time period. Durations corresponding to the fifth time period and the sixth time period may be set according to experience.

In this embodiment of the present disclosure, when the battery circuit 100 is in the discharging state, the first switch 105 is controlled to be opened and the second switch 106 is controlled to be closed within the fifth time period. In this case, the second battery pack 103 charges the voltage transformation unit 104. The first switch 105 is controlled to be closed and the second switch 106 is controlled to be opened within the sixth time period. In this case, the voltage transformation unit 104 releases the stored power. In other words, the voltage transformation unit 104 implements a boosting function. The step is repeated. When a voltage at an output terminal of the voltage transformation unit 104 (a terminal connected with the first switch 105) rises to a same voltage as a bus, the first battery pack 102 is open-circuited, so that the discharging current of the first battery pack 102 is 0.

Third manner: When the SOC value of the power-type battery pack is greater than the second preset threshold or an SOC value of an energy-type battery pack is less than a target value, the first switch 105 and the second switch 106 are controlled to be opened, to connect the first battery pack 102 and the second battery pack 103 in series for charging.

When the SOC value the power-type battery pack is greater than the second preset threshold SOC_high, it indicates that the SOC value of the power-type battery pack is excessively large and therefore high-power charging cannot be achieved. In this case, during the braking of the electric vehicle or the hybrid vehicle, the power-type battery pack cannot absorb the peak charging power. Based on the above, the first switch 105 and the second switch 106 are controlled to be opened, to connect the first battery pack 102 and the second battery pack 103 in series for discharging. In this case, the SOC value of the first battery 102 can be reduced to be less than the second preset threshold SOC_high. In this way, during the braking of the electric vehicle or the hybrid vehicle, the power-type battery pack can absorb the peak charging power.

The target value is a ratio of the SOC value of the power-type battery pack to K. K is a ratio of a capacity value of the power-type battery pack to a capacity value of the energy-type battery pack. K∈[1, 20].

When the SOC value of the energy-type battery pack is less than the target value, it indicates that the SOC value of the second battery pack 103 is excessively small and therefore the electric vehicle or the hybrid vehicle cannot be driven. Based on the above, the first switch 105 and the second switch 106 are controlled to be opened, to connect the first battery pack 102 and the second battery pack 103 in series for discharging, to jointly drive the electric vehicle or the hybrid vehicle.

In this embodiment of the present disclosure, the battery circuit is provided, which includes the power supply terminal, the first battery pack, the second battery pack of a different type from the first battery pack, the voltage transformation unit, the first switch, the second switch, the grounding terminal, and the control unit. The positive electrode of the first battery pack is connected with the power supply terminal. The negative electrode of the first battery pack is connected with the positive electrode of the second battery pack. The negative electrode of the second battery pack is connected with the grounding terminal. The first terminal of the first switch is connected with the power supply terminal. The second terminal of the first switch is connected with the first terminal of the second switch. The control terminal of the first switch is connected with the first output terminal of the control unit. The second terminal of the second switch is connected with the grounding terminal. The control terminal of the second switch is connected with the second output terminal of the control unit. The voltage transformation unit is connected between the negative electrode of the first battery pack and the second terminal of the first switch. The control unit is configured to control the first switch and the second switch to be closed or opened according to at least one of the SOC value of the first battery pack and the SOC value of the second battery pack. According to the battery circuit provided in this embodiment of the present disclosure, a dual battery pack composed of the first battery pack and the second battery pack may be controlled according to at least one of the SOC value of the first battery pack and the SOC value of the second battery pack.

In this embodiment of the present disclosure, a deviation between a rated voltage U1 of the first battery pack 102 and a rated voltage U2 of the second battery pack 103 is less than a first preset range.

In this embodiment of the present disclosure, the first preset range is an allowable range of the deviation between the rated voltage U1 of the first battery pack 102 and the rated voltage U3 of the second battery pack 103. When the deviation between the rated voltage U1 of the first battery pack 102 and the rated voltage U2 of the second battery pack 103 is less than the first preset range, it indicates that the rated voltage U1 of the first battery pack 102 is substantially the same as the rated voltage U2 of the second battery pack 103.

In an embodiment of the present disclosure, the first preset range may exemplarily be 0.2*U1 or 0.2*U2. When the first preset range is 0.2*U1, 1.2*U1≥U2≥0.8*U1. When the first preset range is 0.2*U2, 1.2*U2≥U1≥0.8*U2.

It should be noted that, a specific value of the first preset range is not limited in this embodiment of the present disclosure.

In this embodiment of the present disclosure, when the deviation between the rated voltage U1 of the first battery pack 102 and the rated voltage U2 of the second battery pack 103 is less than the first preset range, efficient energy transfer can be achieved between the first battery pack 102 and the second battery pack 103. For example, efficient mutual charging can be achieved between the first battery pack 102 and the second battery pack 103.

It should be noted that, generally, a sum of the rated voltage U1 of the first battery pack 102 and the rated voltage U1 of the second battery pack 103 is equal to a total voltage Uout required for the load, that is, U1+U2=Uout.

In an embodiment of the present disclosure, the rated voltage U1 of the first battery pack 102 is the same as the rated voltage U2 of the second battery pack 103. In this way, most efficient energy transfer can be achieved between the first battery pack 102 and the second battery pack 103.

Based on the above, in an example, Uout=550V. In this case, U1=U2=275V may be set.

In this embodiment of the present disclosure, a deviation between a ratio of a capacity Q1 of the first battery pack 102 to a capacity Q2 of the second battery pack 103 and a ratio of a maximum discharge rate X2 of the second battery pack 103 to a maximum discharge rate X1 of the first battery pack 102 is less than a second preset range.

The maximum discharge rate represents a ratio of a maximum discharging current of the battery pack to a battery capacity. For example, if a maximum discharging current of a battery pack with a battery capacity of 10 Ah is 50 A, a maximum discharge rate thereof is 50 A/10 Ah=5 C.

In this embodiment of the present disclosure, the second preset range is an allowable range of the deviation between the ratio of the capacity Q1 of the first battery pack 102 to the capacity Q2 of the second battery pack 103 and the ratio of the maximum discharge rate X2 of the second battery pack 103 to the maximum discharge rate X1 of the first battery pack 102. When the deviation between the ratio of the capacity Q1 of the first battery pack 102 to the capacity Q2 of the second battery pack 103 and the ratio of the maximum discharge rate X2 of the second battery pack 103 to the maximum discharge rate X1 of the first battery pack 102 is less than the second preset range, it indicates that the ratio of the capacity Q1 of the first battery pack 102 to the capacity Q2 of the second battery pack 103 is substantially the same as the ratio of the maximum discharge rate X2 of the second battery pack 103 to the maximum discharge rate X1 of the first battery pack 102.

In an embodiment of the present disclosure, the second preset range may exemplarily be ±0.5.

It should be noted that, a specific value of the second preset range is not limited in this embodiment of the present disclosure.

In this embodiment of the present disclosure, when the deviation between the ratio of the capacity of the first battery pack 102 to the capacity of the second battery pack 103 and the ratio of the maximum discharge rate of the second battery pack 103 to the maximum discharge rate of the first battery pack 101 is less than the second preset range, maximum discharging currents of the two battery packs can be substantially the same. Based on the above, for example, the two battery packs can be connected in series for stable discharging.

It should be noted that, generally, a sum of the capacity Q1 of the first battery pack 102 and the capacity Q2 of the second battery pack 103 is equal to a total capacity Qnom required for the load, that is, Q1+Q2=Qnom.

In an embodiment of the present disclosure, the ratio of the capacity Q1 of the first battery pack 102 to the capacity Q2 of the second battery pack 103 is the same as the ratio of the maximum discharge rate X2 of the second battery pack 103 to the maximum discharge rate X1 of the first battery pack 102. In this way, the maximum discharging currents of the two battery packs can be exactly the same.

Based on the above, in an example, Qnom=120 Ah. In this case, Q1=100 Ah, Q2=20 Ah, X1=1 C, and X2=5 C may be set.

In an embodiment of the present disclosure, the control unit 108 may control the first switch 105 and the second switch 106 to be closed or opened according to the first preset control rule or the second preset control rule through a pulse-width modulation (PWM) signal. The first switch 105 and the second switch 106 are controlled to be opened and closed according to the PWM signal. Opening durations and closing durations of the first switch and the second switch 106 are controlled according to a duty cycle of the PWM signal.

In an embodiment of the present disclosure, to implement the foregoing first specific implementation, as shown in FIG. 2, the control unit 108 includes a control subunit 1081, a PWM signal generation subunit 1082, and an inverter 1082.

A first output terminal of the control subunit 1081 is connected with an input terminal of the PWM signal generation subunit 1082.

A first output terminal of the PWM signal generation subunit 1082 is connected with the control terminal of the first switch 105. A second output terminal of the PWM signal generation subunit 1082 is connected with an input terminal of the inverter 1083.

An output terminal of the inverter 1083 is connected with the control terminal of the second switch 106.

In this embodiment of the present disclosure, the control subunit 1081 stores the first preset threshold SOC_low and the second preset threshold SOC_high. The control subunit 108 is configured to obtain the SOC value of the power-type battery pack and the SOC value of the energy-type battery pack. In this embodiment of the present disclosure, a manner in which the control subunit 108 obtains the SOC value of the power-type battery pack is not limited.

In an embodiment of the present disclosure, the control subunit 1081 may exemplarily be a microcontroller unit (MCU), a central processing unit (CPU), or the like.

In this embodiment of the present disclosure, the control subunit 1081 is further configured to generate a PWM signal generation instruction according to the SOC value of the power-type battery pack or the energy-type battery pack when the SOC value of the power-type battery pack (the first battery pack 102 or the second battery pack 103) is less than the first preset threshold SOC_low, and output the PWM signal generation instruction to the PWM signal generation subunit 1082.

The PWM signal generation subunit 1082 is configured to output a PWM signal with an adjustable duty cycle under control of the control subunit 1081.

The inverter 1083 is configured to invert a level outputted by the PWM signal generation subunit 1082.

It should be noted that, in this embodiment of the present disclosure, the control subunit 1081 may periodically obtain the SOC value of the power-type battery pack or the energy-type battery pack. In this way, closed-loop negative feedback regulation can be achieved, so that the duty cycle of the PWM signal generated by the PWM signal generation subunit 1082 may be changed, thereby adjusting the SOC value of the power-type battery pack more quickly.

It may be understood that the foregoing second manner may be achieved in the foregoing manner shown in FIG. 2.

In this embodiment of the present disclosure, the control unit 108 with a simple structure is provided. In this way, design difficulty of the battery circuit provided in the embodiments of the present disclosure can be reduced.

In an embodiment of the present disclosure, as shown in FIG. 2, to control both the first switch 105 and the second switch 106 to be opened, the control unit 108 includes a switch opening signal generation subunit 1084.

A second output terminal of the control subunit 1081 is connected with an input terminal of the switch opening signal generation subunit 1084.

A first output terminal of the switch opening signal generation subunit 1084 is respectively connected with the control terminal of the first switch 105 and the control terminal of the second switch 106.

In this embodiment of the present disclosure, the switch opening signal generation subunit 1084 is configured to output a signal for controlling the first switch 105 and the second switch 106 to be opened under control of the control subunit 1081.

In an embodiment of the present disclosure, when the first battery pack 102 is a power-type battery pack and the second battery pack 103 is an energy-type battery pack, as shown in FIG. 3, the battery circuit 100 provided in this embodiment of the present disclosure further includes a filtering unit 109.

A first terminal of the filtering unit 109 is connected with the positive electrode of the first battery pack 102. A second terminal of the filtering unit 109 is connected with the power supply terminal 101. A third terminal of the filtering unit 109 is connected with the negative electrode of the first battery pack 102.

In this embodiment of the present disclosure, since the power-type battery pack is usually used only when a peak power is generated during the traveling of the electric vehicle or the hybrid vehicle (such as the peak discharging power generated during traction and the peak charging power generated during the braking), in other cases, an output current of the power-type battery pack is expected to be 0. In these cases, arranging the filtering unit 109 can suppress a current ripple of the first battery pack 102, to prevent the output current of the power-type battery pack (the first battery pack 102) from fluctuating around 0. In this way, high-frequency rapid charging/discharging of the first battery pack 102 can be avoided, thereby reducing a life decrease of the first battery pack 102.

In an embodiment of the present disclosure, as shown in FIG. 4, the filtering unit 109 includes a first inductor 1091 and a first capacitor 1092.

A first terminal of the first inductor 1091 is connected with the positive electrode of the first battery pack 102. A second terminal of the first inductor 1091 is connected with the power supply terminal.

A first terminal of the first capacitor 1092 is connected with the first terminal of the first inductor 1091. A second terminal of the first capacitor 1092 is connected with the negative electrode of the first battery pack 102.

Certainly, a filtering unit 109 of another structure may also be used, which is not described in detail in this embodiment of the present disclosure.

In this embodiment of the present disclosure, the first inductor 1091 is a filter inductor, and the first inductor 1091 may be configured with a value in a range of 2 µH to 1500 µH. The first capacitor 1092 is a filter capacitor, the first capacitor 1092 may be configured with a value a range of 2 µF to 1500 µF.

It should be noted that, when the first battery pack 102 has a filtering function, the first inductor 1091 and the first capacitor 1092 may be configured with relatively small values. For example, the first inductor 1091 may be configured with a value of 2 µH, and the first capacitor 1092 may be configured with a value of 2 µF.

Correspondingly, when the first battery pack 102 does not have the filtering function, the first inductor 1091 and the first capacitor 1092 may be configured with relatively large values. For example, the first inductor 1091 may be configured with a value of 1500 µH, and the first capacitor 1092 may be configured with a value of 1500 µF.

In this embodiment of the present disclosure, the filtering unit 109 with a simple structure is provided, which can reduce hardware costs, design difficulty, and a footprint of the battery circuit 100.

In an embodiment of the present disclosure, as shown in FIG. 3, the battery circuit 100 provided in this embodiment of the present disclosure further includes a first freewheeling unit 110 and a second freewheeling unit 111.

An input terminal of the first freewheeling unit 110 is connected with the second terminal of the first switch 105. An output terminal of the first freewheeling unit 110 is connected with the first terminal of the first switch 105.

An input terminal of the second freewheeling unit 111 is connected with the second terminal of the second switch 106. An output terminal of the second freewheeling unit 111 is connected with the first terminal of the second switch 106.

In this embodiment of the present disclosure, at an initial moment of closing the second switch 106 and opening the first switch 105, the first switch 105 usually cannot be controlled to be immediately opened as a result of freewheeling time and action time of the first switch 105. As a result, a short circuit quickly occurs between the first switch 105 and the second switch 106, which causes the first battery pack 102 and the second battery pack 103 to be burnt.

In this embodiment of the present disclosure, the second freewheeling unit 110 is connected in parallel with the two terminals of the second switch 106, and the second freewheeling unit 110 performs freewheeling. In this way, closing time of the second switch 106 can be delayed during control of the first switch 105 to be opened, thereby preventing the first battery pack 102 and the second battery pack 103 from being burnt by a short circuit.

Similarly, in this embodiment of the present disclosure, the first freewheeling unit 109 is connected in parallel with the two terminals of the first switch 105, and the first freewheeling unit 109 performs freewheeling. In this way, closing time of the first switch 105 can be delayed during control of the second switch 106 to be opened, thereby preventing the first battery pack 102 and the second battery pack 103 from being burnt by a short circuit.

In an embodiment of the present disclosure, as shown in FIG. 4, the first freewheeling unit 110 is a first diode 1101, and the second freewheeling unit 111 is a second diode 1111.

An anode of the first diode 1101 is connected with the second terminal of the first switch 105. A cathode of the first diode 1101 is connected with the first terminal of the first switch 105.

An anode of the second diode 1111 is connected with the second terminal of the second switch 106. A cathode of the second diode 1111 is connected with the first terminal of the second switch 106.

In this embodiment of the present disclosure, the first freewheeling unit 110 and the second freewheeling unit 111 with a simple structure are provided, which can reduce hardware costs, design difficulty, and a footprint of the battery circuit 100.

In an embodiment of the present disclosure, as shown in FIG. 3, the battery circuit 100 provided in this embodiment of the present disclosure further includes a voltage stabilization unit 112.

The voltage stabilization unit 1121 is connected between the power supply terminal 101 and the grounding terminal 107.

In this embodiment of the present disclosure, the voltage stabilization unit 112 is configured to filter out a voltage fluctuation on a bus, that is, a line on which the power supply terminal 101 of the battery circuit 100 is located, which can stabilize a voltage supplied to the load, and is further configured to reduce negative impact of a voltage fluctuation jointly generated by the first battery pack 102 and the voltage transformation unit 104 on the second battery pack 103.

In an embodiment of the present disclosure, as shown in FIG. 4, the voltage stabilization unit 112 may exemplarily be a second capacitor 1121. Certainly, the voltage stabilization unit 112 may be implemented in another manner.

In an embodiment of the present disclosure, the second capacitor 1121 is a support capacitor, and the second capacitor 1121 may be configured with a value in a range of 2 µF to 1500 µF.

In this embodiment of the present disclosure, the voltage stabilization unit 112 with a simple structure is provided, which can reduce hardware costs, design difficulty, and a footprint of the battery circuit 100.

An embodiment of the present disclosure further provides a vehicle. The vehicle includes the battery circuit 100 in any of the foregoing embodiments.

In this embodiment of the present disclosure, the vehicle is an electric vehicle or a hybrid vehicle.

The embodiments of the present disclosure have been described above. The above description is exemplary and non-exhaustive, and the present disclosure is not limited to the disclosed embodiments. Many modifications and changes made without departing from the scope and the spirit of the various embodiments are apparent to a person of ordinary skill in the art. The selection of the terms used herein is intended to provide best explanation of the principles, practical applications of the various embodiments, or technical improvements of the technologies in the market, or to enable others of ordinary skill in the art to understand the embodiments disclosed herein. The scope of the present disclosure is defined by the appended claims.

## Claims

1. A battery circuit (100), comprising a power supply terminal (101), a first battery pack (102), a second battery pack (103) of a different type from the first battery pack (102), a voltage transformation unit (104), a first switch (105), a second switch (106), a grounding terminal (107), and a control unit (108), wherein
a positive electrode of the first battery pack (102) is connected with the power supply terminal (101); a negative electrode of the first battery pack (102) is connected with a positive electrode of the second battery pack (103);
a negative electrode of the second battery pack (103) is connected with the grounding terminal (107);
a first terminal of the first switch (105) is connected with the power supply terminal (101); a second terminal of the first switch (105) is connected with a first terminal of the second switch (106); a control terminal of the first switch (105) is connected with a first output terminal of the control unit (108);
a second terminal of the second switch (106) is connected with the grounding terminal (107); a control terminal of the second switch (106) is connected with a second output terminal of the control unit (108); and
the voltage transformation unit (104) is connected between the negative electrode of the first battery pack (102) and the second terminal of the first switch (105),
wherein the control unit (108) is configured to control the first switch (105) and the second switch (106) to be closed or opened according to at least one of a state of charge (SOC) value of the first battery pack (102) and an SOC value of the second battery pack (103).

2. The battery circuit (100) according to claim 1, wherein the control unit (108) is configured to:
control the first switch (105) and the second switch (106) to be closed or opened according to a first preset control rule when an SOC value of a power-type battery pack is less than a first preset threshold, so that the SOC value of the power-type battery pack is greater than or equal to the first preset threshold;
control the first switch (105) and the second switch (106) to be closed or opened according to a second preset control rule when the SOC value of the power-type battery pack is greater than or equal to the first preset threshold and less than or equal to a second preset threshold, so that a charging current or a discharging current of the power-type battery pack is 0; and
control the first switch (105) and the second switch (106) to be opened when the SOC value of the power-type battery pack is greater than the second preset threshold or an SOC value of an energy-type battery pack is less than a target value, to connect the first battery pack (102) and the second battery pack (103) in series for discharging.

3. The battery circuit (100) according to claim 1 or 2, wherein a deviation between a rated voltage of the first battery pack (102) and a rated voltage of the second battery pack (103) is less than a first preset range; and/or
a deviation between a ratio of a capacity of the first battery pack (102) to a capacity of the second battery pack (103) and a ratio of a maximum discharge rate of the second battery pack (103) to a maximum discharge rate of the first battery pack (102) is less than a second preset range.

4. The battery circuit (100) according to claim 3, wherein the rated voltage of the first battery pack (102) is the same as the rated voltage of the second battery pack (103); and/or
the ratio of the capacity of the first battery pack (102) to the capacity of the second battery pack (103) is the same as the ratio of the maximum discharge rate of the second battery pack (103) to the maximum discharge rate of the first battery pack (102).

5. The battery circuit (100) according to any of claims 1 to 4, wherein the first battery pack (102) is a power-type battery pack; and the second battery pack (103) is an energy-type battery pack; or
the first battery pack (102) is an energy-type battery pack; and the second battery pack (103) is a power-type battery pack.

6. The battery circuit (100) according to any of claims 1 to 5, wherein the control unit (108) comprises a control subunit (1081), a pulse-width modulation (PWM) signal generation subunit (1082), and an inverter (1083), wherein
a first output terminal of the control subunit (1081) is connected with an input terminal of the PWM signal generation subunit (1082);
a first output terminal of the PWM signal generation subunit (1082) is connected with the control terminal of the first switch (105); a second output terminal of the PWM signal generation subunit (1082) is connected with an input terminal of the inverter (1083); and
an output terminal of the inverter (1083) is connected with the control terminal of the second switch (106).

7. The battery circuit (100) according to claim 5, wherein the first battery pack (102) is the power-type battery pack; the second battery pack (103) is the energy-type battery pack; and the battery circuit (100) further comprises a filtering unit (109), wherein
a first terminal of the filtering unit (109) is connected with the positive electrode of the first battery pack (102); a second terminal of the filtering unit (109) is connected with the power supply terminal (101); and a third terminal of the filtering unit (109) is connected with the negative electrode of the first battery pack (102).

8. The battery circuit (100) according to claim 7, wherein the filtering unit (109) comprises a first inductor (1091) and a first capacitor (1092), wherein
a first terminal of the first inductor (1091) is connected with the positive electrode of the first battery pack (102); a second terminal of the first inductor (1091) is connected with the power supply terminal (101);
a first terminal of the first capacitor (1092) is connected with the first terminal of the first inductor (1091); and a second terminal of the first capacitor (1092) is connected with the negative electrode of the first battery pack (102).

9. The battery circuit (100) according to any of claims 1 to 8, further comprising a first freewheeling unit (110) and a second freewheeling unit (111), wherein
an input terminal of the first freewheeling unit (110) is connected with the second terminal of the first switch (105); an output terminal of the first freewheeling unit (110) is connected with the first terminal of the first switch (105);
an input terminal of the second freewheeling unit (111) is connected with the second terminal of the second switch (106); and an output terminal of the second freewheeling unit (111) is connected with the first terminal of the second switch (106).

10. The battery circuit (100) according to claim 9, wherein the first freewheeling unit (110) is a first diode (1101); and the second freewheeling unit (111) is a second diode (1111), wherein
an anode of the first diode (1101) is connected with the second terminal of the first switch (105); a cathode of the first diode (1101) is connected with the first terminal of the first switch (105);
an anode of the second diode (1111) is connected with the second terminal of the second switch (106); and a cathode of the second diode (1111) is connected with the first terminal of the second switch (106).

11. The battery circuit (100) according to any of claims 1 to 10, further comprising a voltage stabilization unit (112), wherein
the voltage stabilization unit (112) is connected between the power supply terminal (101) and the grounding terminal (107).

12. The battery circuit (100) according to claim 11, wherein the voltage stabilization unit (112) is a second capacitor (1121).

13. The battery circuit (100) according to any of claims 1 to 12, wherein the voltage transformation unit (104) is a second inductor (1041).

14. A vehicle, comprising the battery circuit (100) according to any of claims 1 to 13.
